# EUROPEAN PATENT APPLICATION

(11) **EP 3 248 828 A1**
(43) Date of publication of application: **29.11.2017**
(21) Application number: 17172273.9
(22) Date of filing: 22.05.2017
(51) Int. Cl.: B60L 11/18

(54) **METHOD OF PAIRING A TRANSMITTER AND RECEIVER OF A WIRELESS CHARGING SYSTEM AND APPARATUS FOR PERFORMING SAME**

(30) Priority: 25.05.2016 US 201662341224 P; 21.02.2017 US 201715437894
(71) Applicant: Delphi Technologies, Inc., Troy, MI 48007-5052 (US)
(72) Inventor: ELY, JEFFREY A., KOKOMO, INDIANA 46901 (US); SIMOPOULOS, GREGORY N., FISHERS, INDIANA 46038 (US); HAO, CHENGHUI F., KOKOMO, INDIANA 46901 (US)
(74) Representative: Delphi France SAS

(57) **Abstract**

A wireless charging system (10), such as one used to charge electric vehicles, includes a number of charging stations (12A-B). As a vehicle (22) approaches the charging stations (12A-B) it transmits a signal commanding all of the charging stations (12A-B) to transmit a magnetic station identification signal (18), each having a unique pulse pattern, through their source coils (14A-B). The vehicle (22) will then receive an identification signals from one particular charging station (12A) through the vehicle's capture coil (38) and based on the unique pulse pattern of the identification signal received, transmit another signal instructing that particular charging station (12A) to begin generating a charging signal and instruct the other charging stations (12B) to stop transmitting their identification signals.

## Description

### TECHNICAL FIELD OF INVENTION

The invention generally relates to a wireless charging system, and more particularly relates to a method and an apparatus to pair one of two or more wireless charging transmitters (i.e. charging stations) with a wireless charging receiver (e.g. electric vehicle).

### BACKGROUND OF THE INVENTION

Wireless charging systems have usually been "hard-coded" for a particular electric vehicle to use a particular charging station. The charging station is usually distinguished by a fixed IP address on a particular service set identifier (SSID). Normally, the charging stations and the vehicles communicate with each other via a wireless data link conforming to one or more of the Institute of Electrical and Electronics Engineers (IEEE) 802.11 standards, commonly known as Wi-Fi. It is desired that several electric vehicles and several charging stations might be made to operate in a system where any of the electric vehicles can use any of several available charging stations. This requires that an electric vehicle and a charging station are able to identify a "pairing" and establish dedicated communication link to control the charging process. It is desired that more than one electric vehicle can be seeking a "pairing" at the same time. Therefore, a wireless charging system capable of pairing a vehicle to a charging station is desired.

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches, which in and of themselves may also be inventions.

### BRIEF SUMMARY OF THE INVENTION

In accordance with one embodiment of this invention, a wireless charging system is provided. The wireless charging system includes a first charging station that is configured to operate in a first mode in which the first charging station generates a first magnetic field having a first pulse modulation pattern to identify the first charging station. The first charging station is further configured to operate in a second mode in which the first charging station generates a second magnetic field that is distinct from the first magnetic field to provide wireless charging. The first charging station includes a first station receiver and a first station controller. The wireless charging system also includes a vehicle that has a capture coil configured to produce an alternating current when excited by a magnetic field. The vehicle also includes a voltage detection circuit electrically that is coupled to the capture coil and is configured to determine the voltage of the alternating current generated by the capture coil. The vehicle further includes a vehicle controller that is in communication with the voltage detection circuit and a vehicle transmitter that is also in communication with the vehicle controller. The vehicle transmitter is configured to send messages from the vehicle to the first station receiver. The vehicle controller includes a first non-volatile memory containing a first set of instructions that, when executed, cause the vehicle transmitter to broadcast a first message, cause the vehicle controller to determine a modulation pattern of the voltage of the alternating current, and cause the vehicle transmitter to broadcast a second message based on the modulation pattern. The first station controller includes a second non-volatile memory containing a second set of instructions that, when executed, cause the first charging station to operate in the first mode after the first station receiver receives the first message, and cause the first charging station to operate in the second mode after the first station receiver receives the second message if the second message is based on the first pulse modulation pattern.

The wireless charging system may further include a second charging station that is distinct from the first charging station and is configured to operate in a third mode in which the second charging station generates a third magnetic field having a second pulse modulation pattern which is distinct from the first modulation pattern. The second charging station is further configured to operate in the second mode in which the second charging station generates the second magnetic field which is distinct from the third magnetic field. The second charging station includes a second station receiver and a second station controller. The second station controller includes a third non-volatile memory containing a third set of instructions that, when executed, cause the second charging station to operate in the third mode after the second station receiver receive the first message and cause the second charging station to operate in the second mode after the first station receiver receives the second message if the second message is based on the second pulse modulation pattern.

The second set of instructions in the memory of the first station controller may contain additional instructions that, when executed, causes the first charging station to discontinue operating in the first mode after a time period elapses since the first message is received and the second message is not received within the time period. The third set of instructions in the memory of the second station controller may contain additional instructions that, when executed, causes the second charging station to discontinue operating in the first mode after a time period elapses since the first message is received and the third message is not received within the time period.

The second set of instructions in the memory of the first station controller may contain additional instructions that, when executed, causes the first charging station to discontinue operating in the first mode after the first station receiver receives the third message and wherein the third set of instructions in the memory of the second station controller may contain additional instructions that, when executed, causes the second charging station to discontinue operating in the third mode after the second station receiver receives the second message.

The first magnetic field and the third magnetic field have a first field strength and the second magnetic field may have a second field strength that is greater than the first field strength. The second magnetic field may not be pulse modulated.

Further features and advantages of the invention will appear more clearly on a reading of the following detailed description of the preferred embodiment of the invention, which is given by way of non-limiting example only and with reference to the accompanying drawings.

### BRIEF DESCRIPTION OF THE SEVERAL VIEWS OF THE DRAWING

The present invention will now be described, by way of example with reference to the accompanying drawings, in which:
Fig. 1 is an overhead perspective view of a wireless charging system in accordance with one embodiment;
Fig. 2 is a side view of the wireless charging system of Fig. 1 in accordance with one embodiment;
Fig. 3 is a schematic diagram of the wireless charging system of Fig. 1 in accordance with one embodiment;
Fig. 4 is a flow chart for the operation of a vehicle in the wireless charging system of Fig. 1 in accordance with one embodiment;
Fig. 5 is a flow chart for the operation of a charging station in the wireless charging system of Fig. 1 in accordance with one embodiment; and
Fig. 6 is a diagram of a sample pulse pattern of the wireless charging system of Fig. 1 in accordance with one embodiment.

### DETAILED DESCRIPTION OF THE INVENTION

Presented herein is a wireless charging system and a method of operating such a wireless charging system. The wireless charging system includes a wireless charging station and a vehicle having a wireless receiver, for example in an electric vehicle. The wireless charging system transmits electrical power between the charging station and the receiver. The charging station converting an alternating electrical current to an alternating magnetic field through a source coil and a capture coil in the receiver converts the magnetic field to an alternating electric current. The current produced by the capture coil may be used in the vehicle to charge an energy storage device, such as a battery. A wireless transmitter in the vehicle is used to send data messages to a wireless receiver in the charging station and the source coil is used to transmit station identification data from the charging station to the capture coil of the vehicle. As will be explained in detail below, this system and method allow pairing of a vehicle to one of a several charging stations that are co-located without the need for a central controller directing the operation of the several charging stations.

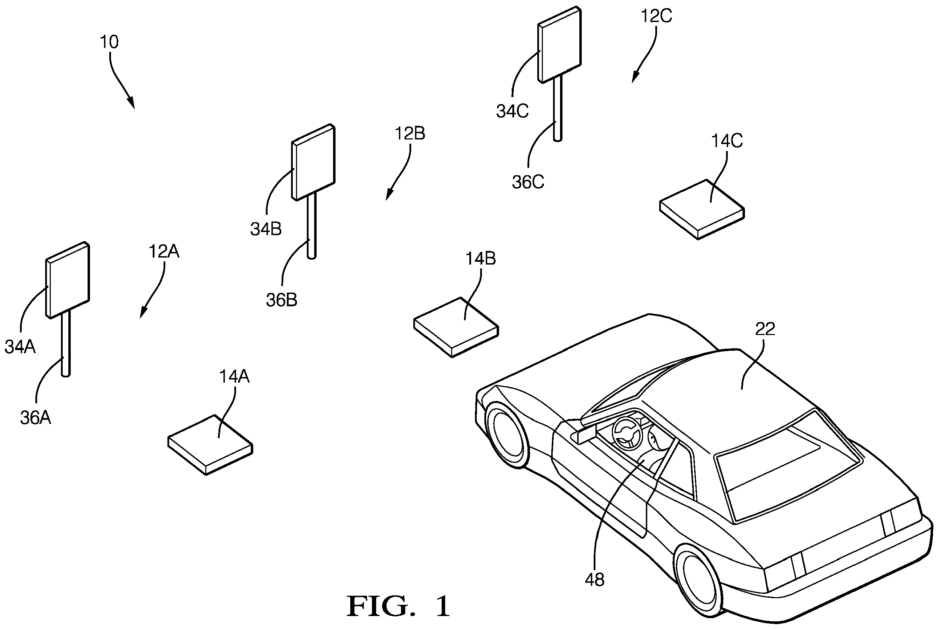

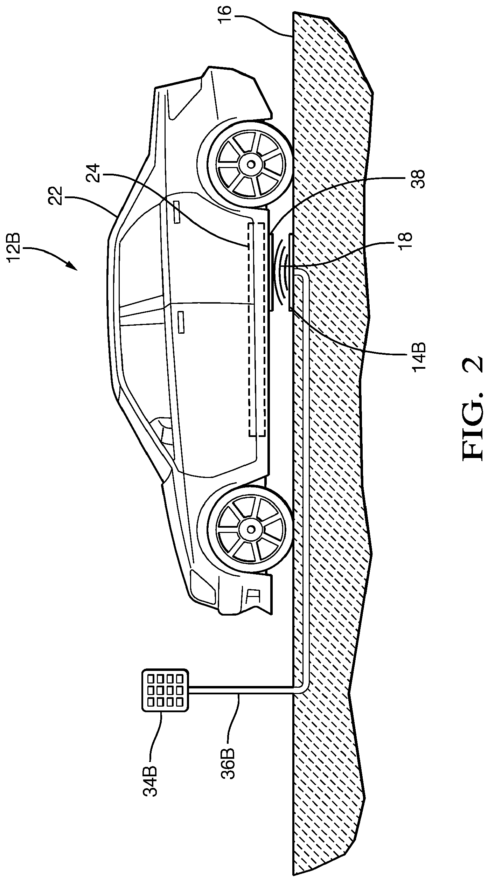

Figs. 1 through 3 illustrate a non-limiting example of a wireless charging system 10. As shown in Fig. 1, the wireless charging system 10 includes a plurality of wireless charging stations 12A-C that are co-located near each other, for example in a public parking lot. Each of the wireless charging stations 12A-C have a source coil 14A-C positioned on a parking surface 16 which is configured to generate an alternating magnetic field 18, hereafter referred to as the magnetic field 18. The wireless charging system 10 further includes a wireless power receiver 20 disposed within a vehicle 22. The a wireless power receiver 20 is configured to receive the magnetic field 18 when the wireless power receiver 20 is aligned with one of the source coils 14A-C by aligning the vehicle 22 over the source coil 14B as shown in Fig. 2. The wireless power receiver 20 is configured convert the energy in the magnetic field 18 to electrical energy that is supplied to an electrical storage device 24, in this example a battery pack 24 within the vehicle 22.

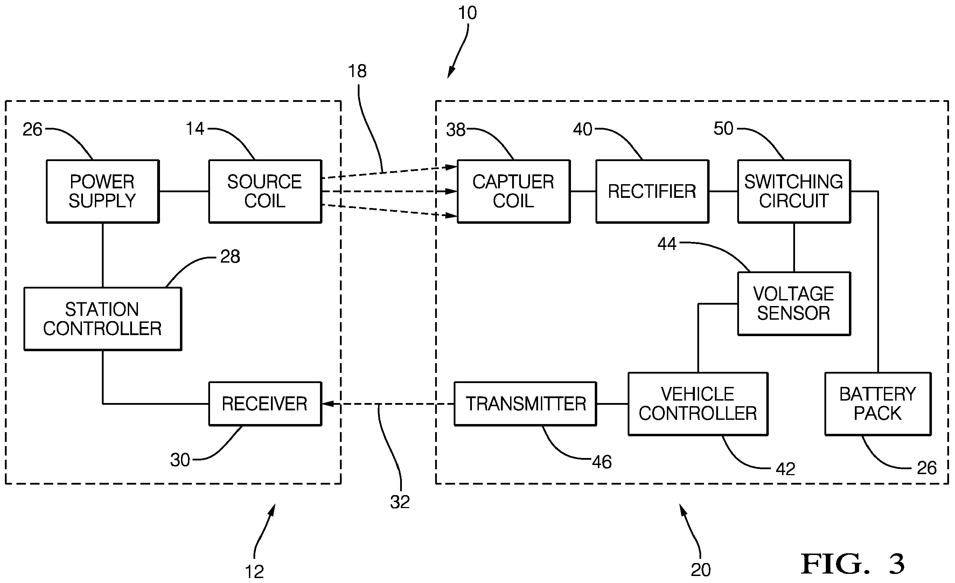

As illustrated in Fig. 3, the source coil 14 of the wireless charging station 12 is part of a resonant circuit configured to generate the magnetic field 18 when excited by an alternating current (AC) voltage supplied by a power supply 26. The power supply 26 is configured to convert electrical power (e.g. 240 volts AC at 60 hertz) from the public supply grid (not shown) to a different voltage and frequency that is supplied to the source coil 14. The wireless charging station 12 also includes a station controller 28 that is configured to control the power supply 26 and thereby control the magnetic field 18 provided by the source coil 14. The wireless charging station 12 further includes a station receiver 30 that is in communication with the station controller 28 and is configured to establish a wireless communication link 32 with the wireless power receiver 20 in the vehicle 22 and send data messages from the vehicle 22 to the station controller 28.

According to a non-limiting example illustrated in Fig. 2, the power supply 26, the station controller 28, and the station receiver 30 may be contained in a stand-alone housing 34A-C that is located remotely from the source coil 14A-C. In this example, the housing 34A-C is mounted on a pylon or post 36A-C in front of a vehicle parking space while the source coil 14A-Cis located on or in the parking surface 16 under the vehicle 22. Other embodiments may be envisioned in which the source coil 14A-C is co-located with the power supply 26, the station controller 28, and the station receiver 30 within the parking surface 16.

Referring again to Fig. 3, the wireless power receiver 20 includes the capture coil 38 that is part of another resonant circuit that is configured to generate an alternating electrical current when excited by the magnetic field 18 generated by the source coil 14. The wireless power receiver 20 also includes a rectifier circuit 40 that converts (rectifies) the alternating current (AC) electrical power provided by the capture coil 38 to direct current (DC) electrical power that is usable by an electrical load such as an electric vehicle (EV) or hybrid electric vehicle (HEV) battery pack 24. Alternative embodiments may be envisioned that provide the AC power output from the capture coil 38 unchanged to an AC electrical load, such as an AC motor that includes circuitry to alter the frequency and voltage of the AC power provided to the AC load. The wireless power receiver 20 also includes a vehicle controller 42, a voltage detection circuit 44, and a vehicle transmitter 46; both the voltage detection circuit 44 and the vehicle transmitter 46 are connected to the vehicle controller 42.

The voltage detection circuit 44 is connected to the output of the capture coil 38 the controller and may be used as an input by the vehicle controller 42 to determine when the capture coil 38 is outputting electrical power. The voltage detection circuit 44 may be electrically coupled to the output of the rectifier circuit 40. The voltage detection circuit 44 senses when there is high voltage DC on the output of the rectifier circuit 40 and sends a digital signal to the vehicle controller 42. Typically in high voltage circuits, circuits that are attached to high voltage should be isolated for safety reasons. In the case of the voltage detection circuit 44, an optocoupler may be used.

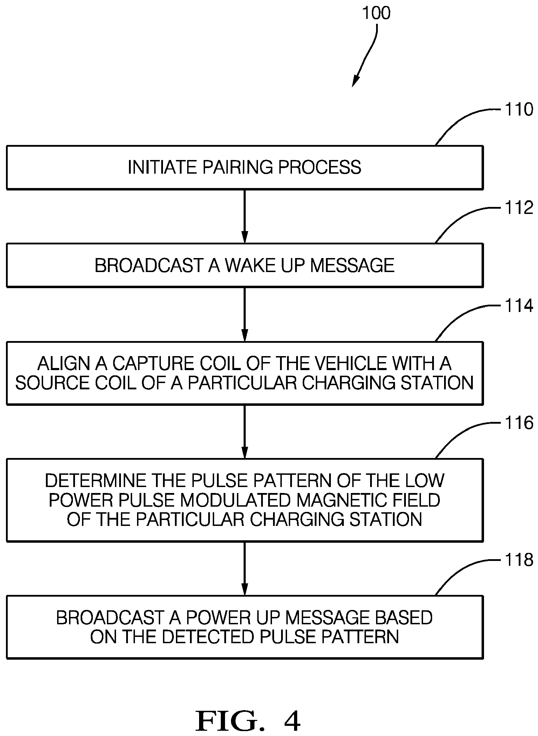

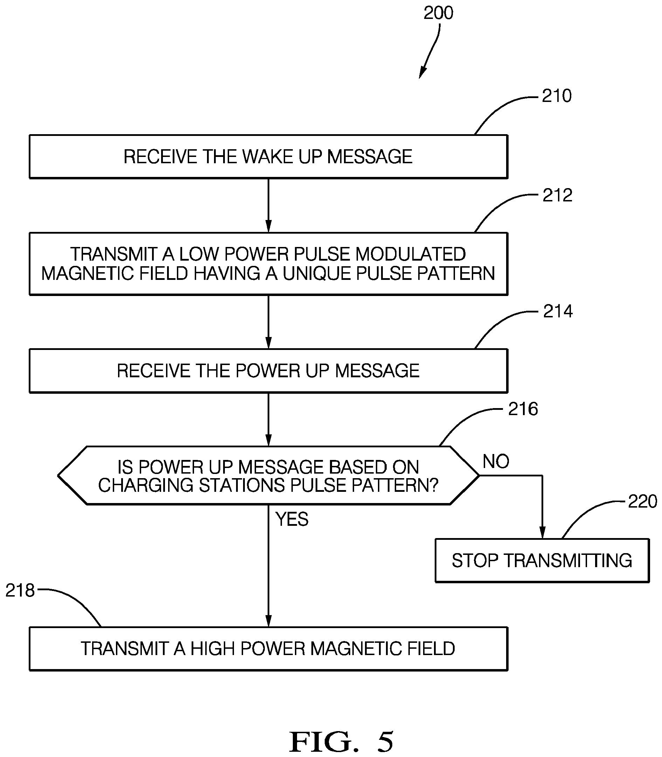

Fig. 4 is a flow chart of the method 100 used by the vehicle 22 and Fig. 5 is a flow chart of the method 200 used by the wireless charging stations 12A-12C to pair the vehicle 22 with one of the wireless charging stations 12A-C. The steps of these methods are described below.

The process begins with STEP 110, INITIATE PAIRING PROCESS which starts the process of pairing the vehicle 22 with one of the charging stations. STEP 110 may be performed manually, e.g. by the vehicle driver 48 pressing a button on the vehicle's instrument panel (not shown) that is connected to the vehicle controller 42. Alternatively, STEP 110 may be performed automatically, e.g. when a vehicle location system (not shown) determines that the vehicle 22 is near the wireless charging stations 12A-C and a battery charge monitoring system (not shown) determines that battery pack 24 needs to be recharged.

After the pairing process is initiated, the vehicle controller 42 commands the vehicle transmitter 46 to perform STEP 112, BROADCAST A WAKE UP MESSAGE which causes the vehicle transmitter 46 to wirelessly send a wake up message to the station receivers 30 of the wireless charging stations 12A-C. The wake up message may be a digital data message transmitted according to a standard data protocol, such as one of the IEEE 802.11 standards.

In STEP 210, RECEIVE THE WAKE UP MESSAGE, the station receiver 30 of the wireless charging stations 12A-C receives the wake up message from the vehicle transmitter 46 and communicates the message to the station controller 28.

In STEP 212, TRANSMIT A LOW POWER PULSE MODULATED MAGNETIC FIELD HAVING A UNIQUE PULSE PATTERN, after the station controller 28 receives the wake up message from the station receiver 30, the station controller 28 commands the wireless charging station 12 to transmit a lower power pulse modulated magnetic field 18. Each of the wireless charging stations 12A-C is configured to respond to the same wake up message. The lower power pulse modulated magnetic field 18 may be generated when the station controller 28 commands the power supply 26 to send a pulse modulated alternating current to the source coil 14 by periodically interrupting the alternating current sent to the source coil 14 according to a predetermined pattern. The power of the magnetic field 18 transmitted during STEP 212 may be lower than the magnetic field 18 generated in STEP 218. This may be accomplished, for example, by the power supply 26 generating a 2 volt peak to peak square wave during STEP 212 versus generating a 300 volt peak to peak square wave during STEP 218. The wireless power receiver 20 may include circuitry to switch a resistive load, e.g. a 1kΩ resistor, in parallel with the source coil 14 during STEP 212 to "load" the source coil 14 and make the pulse transitions from an on state to/from an off state more stable and repeatable during STEP 212. The pulse pattern of the pulse modulated magnetic field 18 of each of the wireless charging stations 12A-C is unique, at least to the co-located wireless charging stations 12A-C.

In STEP 114, the capture coil 38 on the vehicle 22 is aligned with the source coil 14B of one of the wireless charging stations 12B as shown in Fig. 2. The alignment may be performed manually by an operator of the vehicle 22 by aligning the vehicle 22 with reference marks on the parking surface 16. The operator may also be assisted by alignment systems that automatically detect the location of the capture coil 38 relative to the source coil 14 and provide the vehicle driver 48 guidance for maneuvering the vehicle 22 into capture/source coil 14 alignment. Examples of such wireless charging alignment systems may be found, *inter alia*, in U. S. Patent Application Publications 2013/0037339, 2014/0253346, and 2015/0015193.

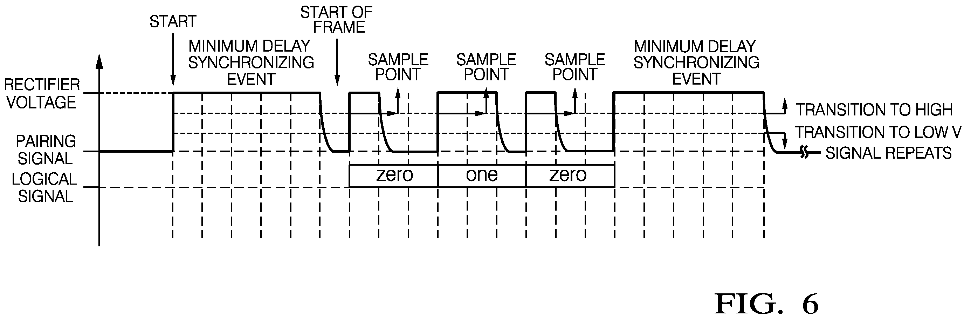

As the capture coil 38 is aligned with one of the source coils 14B, in STEP 114, the capture coil 38 produces a low power pulse modulated alternating current having the same unique pulse pattern of the pulse modulated magnetic field 18 produced by that source coil 14. The alternating current output from the capture coil 38 is then processed by the rectifier circuit 40 which outputs a direct current (DC) which switches between a lower voltage state and a higher voltage state as shown in Fig. 6. This pulse modulated DC signal is then output by the rectifier circuit 40 to the voltage detection circuit 44.

Fig. 6 illustrates an example of a pulse pattern output from the rectifier circuit 40. As seen in Fig. 6, the pulse modulated magnetic field 18 of the source coil 14 causes the rectifier output to stay at a higher voltage value for a predetermined period of time in order to synchronize the pulse modulated signal. The rectifier voltage then makes three high to low transitions. These transitions are used to provide a binary encoded identification code or identification message. The duration of the low transition determines whether the transition represents a binary "0" or "1" value. In the illustrated example, a longer transition to a low voltage level represents a "0" value while a shorter transition represents a "1" value. Following the three transitions, the rectifier output returns to the high value for the predetermined period of time needed for synchronization and the transition pattern is then repeated. The pulse pattern shown in Fig. 6 contains 3 bits and therefore could be used in a wireless charging system 10 having up to 8 separate charging stations. Longer or shorter pulse patterns may be used to differentiate a larger or smaller number of charging stations.

In STEP 116, the voltage detection circuit 44 determines the voltage of the pulse modulated DC signal and transmits this data to the vehicle controller 42 which determines the pulse pattern. In STEP 118, the vehicle controller 42 then commands the vehicle transmitter 46 to broadcast a power up message to all of the wireless charging stations 12A-C based on the received pulse pattern. The power up message contains an identification code identifying the particular wireless charging station 12B from which the pulse pattern was received. For example, based on the pulse pattern received according to Fig. 6, the power up message would include the identification code "101" to identify the particular wireless charging station 12B.

In STEP 214, the station receiver 30 of each of the wireless charging stations 12A-C will receive the power up message from the vehicle transmitter 46 and each station receiver 30 will send the power up message to its respective station controller 28. In STEP 216, the station controller 28 determines if the power up message is based on the charging station's own pulse pattern, i.e. identification code. If the power up message is based on the charging station's (12B) own identification code, then the station controller 28 proceeds to STEP 218 and commands the power supply 26 to begin sending a high power alternating current (e.g. 300 volt peak to peak square wave) to the source coil 14 to produce a high power magnetic field 18. This high power magnetic field 18 will produce a high power alternating current in the capture coil 38 that is sufficient to support charging of the battery pack 24 in the vehicle 22. This high power alternating current is preferably not pulse modulated. If the power up message is not based on the charging station's (12A, 12C) own identification code, then the station controller 28 proceeds to STEP 220 and commands the power supply 26 to stop sending the low-power pulse modulated alternating current (e.g. 2 volt peak to peak square wave) to the source coil 14. The station controller 28 may command the charging station to stop sending the low-power pulse modulated magnetic field 18 immediately after determining that the power up message is not based on the charging station's (12A, 12C) own identification code or it may stop sending the low-power pulse modulated magnetic field 18 after a time out period expires after initially receiving the wake up message.

The voltage detection circuit 44 may be isolated from exposure to high voltage by switching circuits 50 controlled by the vehicle controller 42 that disconnect the voltage detection circuit 44 after the vehicle controller 42 determines the pulse pattern in STEP 116 and before the vehicle controller 42 commands broadcasting of the power up message.

The vehicle controller 42 may be a standalone device that is configured to control the wireless power receiver 20 or the vehicle controller 42 may be a device that shares control of other functions on the vehicle 22. The vehicle controller 42 may include a microprocessor or application specific integrated circuit (ASIC). Software instructions that program the vehicle controller 42 to control the wireless power receiver 20 are stored in a first non-volatile (NV) memory device. The first NV memory device may be contained within the microprocessor or ASIC or it may be a separate device. Non-limiting examples of the types of NV memory that may be used include electrically erasable programmable read only memory (EEPROM), masked read only memory (ROM) and flash memory. The first NV memory device contains a set of instructions that, when executed, cause the vehicle controller 42 to perform the actions of STEPS 110 - 118 of the method 100 described above. The vehicle controller 42 may be interconnected with other controllers or devices on the vehicle 22 via a data bus, such as a controller area network (CAN) bus.

The vehicle controller 42 may also include analog to digital (A/D) convertor circuits and digital to analog (D/A) convertor circuits to allow the convertor to establish electrical communication with the vehicle transmitter 46, voltage detection circuit 44, and other devices external to the wireless power receiver 20. The vehicle controller 42 described herein may include several microprocessors that are communicating with each other.

The station controller 28 may include a microprocessor or application specific integrated circuit (ASIC). Software instructions that program the station controller 28 to control the wireless charging station 12 are stored in a second NV memory device. The second NV memory device may be contained within the microprocessor or ASIC or it may be a separate device. Non-limiting examples of the types of NV memory that may be used include electrically erasable programmable read only memory (EEPROM), masked read only memory (ROM) and flash memory. The second NV memory device contains a set of instructions that, when executed, cause the station controller 28 to perform the actions of STEPS 210 through 220 of the method 200 described above.

The station controller 28 may also include analog to digital (A/D) convertor circuits and digital to analog (D/A) convertor circuits to allow the station controller 28 to establish electrical communication with devices within the station controller 28, such as the station receiver 30 and power supply 26 and to devices external to the station controller 28. The station controller 28 described herein may include several microprocessors that are communicating with each other.

Accordingly, a method 100, 200 of pairing a wireless charging station 12 to a wireless power receiver 20 and a wireless charging systems includes a number of separate wireless charging stations 12A-C employing this method 100, 200 to pair a wireless power received to a particular wireless charging station 12 is provided. This method 100, 200 provides the benefit of pairing the wireless power receiver 20 to a particular wireless charging station 12 without the need to a central controller interfacing all of the wireless charging stations 12A-C in the wireless charging system 10. This provides the benefit of scalability for the charging system since additional charging stations may be added without the need to interface with a central controller. The method 100, 200 also allows the use of a simpler vehicle transmitter 46 in the vehicle 22 and station receiver 30 in the wireless charging station 12 for data communication from the vehicle 22 to the wireless charging stations 12A-C, since data communication from the wireless charging station 12 to the vehicle 22 is accomplished by the a low power magnetic field 18 generated by the source coil 14, thus providing lower system manufacturing costs than using transceivers in both the vehicle 22 and wireless charging stations 12A-C to transmit data there between.

While the example embodiments of the invention presented herein are primarily directed to wireless battery charging of an electrical vehicle, other embodiments may be envisioned for pairing a wireless power transmitter and wireless power receiver in other wireless power transfer applications, for example a wireless charging enabled cellular telephone used with a public charging system having multiple charging stations.

While this invention has been described in terms of the preferred embodiments thereof, it is not intended to be so limited, but rather only to the extent set forth in the claims that follow. Moreover, the use of the terms first, second, etc. does not denote any order of importance, but rather the terms first, second, etc. are used to distinguish one element from another. Furthermore, the use of the terms a, an, etc. do not denote a limitation of quantity, but rather denote the presence of at least one of the referenced items.

## Claims

1. A wireless charging system (10), comprising:
a first charging station (12A) including a first source coil (14A), said first charging station (12A) configured to operate in a first mode in which the first source coil (14A) generates a first magnetic field (18) having a first pulse modulation pattern, said first charging station (12A) further configured to operate in a second mode in which the first source coil (14A) generates a second magnetic field (18) distinct from the first magnetic field (18), said first charging station (12A) including a first station receiver (30) and a first station controller (28); and
a vehicle (22) including a capture coil (38) configured to produce an alternating current when excited by the first or second magnetic field (18), a voltage detection circuit (44) electrically coupled to the capture coil (38) configured to determine a voltage of the alternating current, a vehicle controller (42) in communication with the voltage detection circuit (44), and a vehicle transmitter (46) in communication with the vehicle controller (42) and configured to send messages to the first station receiver (30);
wherein the vehicle controller (42) includes a first non-volatile memory containing a first set of instructions that, when executed, cause the vehicle transmitter (46) to broadcast a first message, cause the vehicle controller (42) to determine a pulse modulation pattern of the voltage of the alternating current, and cause the vehicle transmitter (46) to broadcast a second message based on the pulse modulation pattern; and
wherein the first station controller (28) includes second non-volatile memory containing a second set of instructions that, when executed, cause the first charging station (12A) to operate in the first mode after the first station receiver (30) receives the first message, and cause the first charging station (12A) to operate in the second mode after the first station receiver (30) receives the second message if the second message is based on the first pulse modulation pattern.

2. The wireless charging system (10) according to claim 1, further comprising a second charging station (12B) that is distinct from the first charging station (12A) and configured to operate in a third mode in which the second charging station (12B) generates a third magnetic field (18) having a second pulse modulation pattern that is distinct from the first pulse modulation pattern, said second charging station (12B) further configured to operate in the second mode in which it generates the second magnetic field (18) which is distinct from the third magnetic field (18), said second charging station (12B) having a second station receiver (30) and a second station controller (28), wherein the capture coil (38) is configured to produce the alternating current when excited by the third magnetic field (18); and
wherein the second station controller (28) includes a third non-volatile memory containing a third set of instructions that, when executed, cause the second charging station (12B) to operate in the third mode after the second station receiver (30) receives the first message and cause the second charging station (12B) to operate in the second mode after the first station receiver (30) receives the second message if the second message is based on the second pulse modulation pattern.

3. The wireless charging system (10) according to one of the preceding claims, wherein the second set of instructions contains additional instructions that, when executed, causes the first charging station (12A) to discontinue operating in the first mode after a time period elapses since the first message is received and the second message is not received before the time period elapses.

4. The wireless charging system (10) according to one of the claims 2-3, wherein the third set of instructions contains additional instructions that, when executed, causes the second charging station (12B) to discontinue operating in the first mode after a time period elapses since the first message is received and the second message is not received before the time period elapses.

5. The wireless charging system (10) according to one of the claims 2-4, wherein the first magnetic field (18) and the third magnetic field (18) has a first field strength and wherein the second magnetic field (18) has a second field strength that is greater than the first field strength.

6. The wireless charging system (10) according to one of the claims 2-5, wherein the vehicle transmitter (46) communicates with the first station receiver (30) and the second station receiver (30) over wireless data links.

7. The wireless charging system (10) according to one of the claims 2-6, wherein transitions in the second pulse modulation pattern provide a binary encoded identification message.

8. The wireless charging system (10) according to one of the preceding claims, wherein the second magnetic field (18) is not pulse modulated.

9. The wireless charging system (10) according to one of the preceding claims, wherein transitions in the first pulse modulation pattern provide a binary encoded identification message.
